# EUROPÄISCHE PATENTSCHRIFT

(11) **EP 3 749 024 B1**
(45) Veröffentlichungstag und Bekanntmachung des Hinweises auf die Patenterteilung: **10.08.2022**
(21) Anmeldenummer: 19178499.0
(22) Anmeldetag: 05.06.2019
(51) Int. Cl.: H04W 52/02

(54) **SYSTEME UND VERFAHREN ZUM DETEKTIEREN EINGEHENDER DATENPAKETE AN EINEM ENDGERÄT**
SYSTEMS AND METHOD FOR DETECTING INCOMING DATA PACKETS TO A TERMINAL
SYSTÈMES ET PROCÉDÉS DE DÉTECTION DE PAQUETS DE DONNÉES ENTRANT SUR UN ÉQUIPEMENT TERMINAL

(43) Veröffentlichungstag der Anmeldung: 09.12.2020
(73) Patentinhaber: ise Individuelle Software und Elektronik GmbH, 26122 Oldenburg (DE)
(72) Erfinder: Gossé, Christian, 67870 Bischoffsheim (FR); Kamenik, Jens, 26133 Oldenburg (DE)
(74) Vertreter: Angerhausen, Christoph

(56) Entgegenhaltungen:
- US-A1- 2014 011 552
- US-A1- 2016 014 715

## Beschreibung

### GEBIET

Die vorliegende Patentanmeldung bezieht sich auf Systeme und Verfahren zum Detektieren eingehender Datenpakete an einem Endgerät in einem Netzwerk, insbesondere in einem lokalen Netzwerk, dessen Endgeräte vorwiegend über Batterien betrieben werden und drahtlos mit anderen Endgeräten kommunizieren.

### HINTERGRUND

Endgeräte eines Kommunikationsnetzwerks, die sich zur drahtlosen Kommunikation eignen, enthalten als Hauptbestandteile üblicherweise einen Mikrocontroller, einen Funk-Transceiver und eine Batterie, in der Regel einen Akkumulator. Der Mikrocontroller dient der Ausführung von Programmen, der Funk-Transceiver dem Empfang und der Versendung von Daten, und die Batterie als Stromaggregat. Um den Energieverbrauch eines Endgerätes zu senken, können Mikrocontroller und/oder Funk-Transceiver in einen inaktiven Zustand wechseln. Zumindest der Funk-Transceiver wird in einem solchen Fall gelegentlich den inaktiven Zustand verlassen müssen, um für eventuell eingehende Daten zur Verfügung zu stehen.

In "W. Ye, J. Heidemann und D.Estrin, 'An Energy-Efficient MAC Protocol for Wireless sensor Networks', in INOCOM 2002. Twenty-First Annual Joint Conference of the IEEE Computer and Communications Societies. Proceedings. IEEE, vol. 3, 2002, pp. 1567-1576" schlagen die Autoren vor, ein Endgerät periodisch in einen inaktiven Zustand eintreten zu lassen. Beispielsweise kann ein Endgerät abwechselnd eine halbe Sekunde in einem inaktivem Zustand und eine halbe Sekunde in einem aktiven Zustand sein, um eine Energieersparnis von annähernd 50 Prozent zu erzielen. Bei Wiedereintreten in den aktiven Zustand prüft das Endgerät, ob Daten an das Endgerät gesendet werden. Gemäß dieser Veröffentlichung synchronisieren sich mehrere Endgeräte miteinander bezüglich inaktiven und aktiven Zeiten, um zu verhindern, dass ein Endgerät Daten versäumt, die während seiner inaktiven Zeit gesendet werden.

In "A. El-Hoiydi, 'Aloha with Preamble Sampling for Sporadic Traffic in Ad Hoc Wireless Sensor Networks'. In Proceedings of IEEE International Conference on Communications, New York, NY, USA, Apr. 2002" wird das bekannte Aloha-Verfahren und das Versenden von Präambeln erläutert. Mit Aloha wird ein Verfahren bezeichnet, bei dem Endgeräte Datenpakete per Unicast versenden; auf diese Weise sind Datenpakete auch für solche Endgeräte sichtbar, die nicht als Empfänger dieser Datenpakete adressiert sind. Beim Auftreten einer Kollision mit einem anderen Datenpaket wird das Datenpaket zu einem zufällig gewählten Zeitpunkt erneut versendet. Vor jedem Paket wird eine Präambel versendet, die eine vorbestimmte Länge hat. Endgeräte erwachen periodisch nach Ablauf dieser vorbestimmten Länge und prüfen, ob eine Präambel vorliegt. Bei Vorliegen einer Präambel verbleibt das Endgerät in einem aktiven Zustand, bis das Paket empfangen wird; ohne Präambel tritt das Endgerät erneut in den inaktiven Zustand ein.

Die US 2016/0014715 A1 offenbart Geräte, die in der Lage sind, einen Übertragungskanal zu überwachen und Nachrichten zur Ankündigung von Datenverkehr zu empfangen. Bei Erhalt einer solchen Nachricht kann bestimmt werden, ob das empfangende Gerät ein Adressat dieser Nachricht ist. Abhängig davon, ob dies zutrifft, kann ein Gerät in einen inaktiven oder aktiven Zustand eintreten.

Die US 2014/011552 Al beschreibt den Empfang von speziellen Präambelsequenzen mit dem Ziel des energieeffizienten Aufweckens von Endgeräten.

### ZUSAMMENFASSUNG

Der hier offenbarten Erfindung liegt die Aufgabe zugrunde, den Energieverbrauch von Endgeräten zu optimieren, ohne dass die Endgeräte Datensendungen versäumen, die an sie gerichtet sind. Diese Aufgabe wird durch die nebengeordneten Ansprüche gelöst.

Im folgenden werden die Begriffe Datenpaket, Frame und Datensequenz als Synonyme verwendet und betreffen eine Abfolge von übermittelten Daten, im Gegensatz zu einer Präambel, die lediglich Begleitdaten (auch: Metadaten) für ein Datenpaket enthält und die vor einer solchen Abfolge übermittelt wird. Unter einer Ausführungseinheit ist jede Software- oder Hardware-Komponente eines Endgeräts zu verstehen, die in der Lage ist, Programmcode auszuführen; Beispiele für Ausführungseinheiten umfassen unter anderem einen Prozessor und einen Mikrocontroller. Ein Transceiver ist eine Komponente zum Empfangen und/oder Senden eines Netzwerksignals durch ein Endgerät; anstelle eines Transceivers kann in sämtlichen hier erläuterten Ausführungsformen auch ein reiner Empfänger verwendet werden. Die Begriffe Präambel und Präambelsequenz werden synonym verwendet. Der Begriff Endgerät steht synonym für eine netzwerkfähige Recheneinrichtung, beispielsweise ein Mobiltelefon oder einen Laptop und allgemein für einen Knoten in einem Netzwerk, insbesondere einem lokalen Netzwerk. Ein inaktiver Zustand ist ein Zustand, in dem eine Komponente weniger Strom verbraucht als im Normalbetrieb; dieser Zustand kann auch als Ruhezustand oder Sleep-State bezeichnet werden. Ein aktiver Zustand ist ein Zustand, in dem sich eine Komponente im normalen Betrieb befindet.

Die Erfindung ist in den beigefügten Ansprüchen definiert.

### KURZE BESCHREIBUNG DER ZEICHNUNGEN

Figur 1 zeigt ein Verfahren gemäß Ausführungsformen der Erfindung.
Figuren 2 bis 6 zeigen beispielhafte Ausführungsbeispiele der Erfindung.

### AUSFÜHRLICHE BESCHREIBUNG

Sowohl in drahtgebundenen als auch in drahtlosen lokalen Netzwerken werden Protokolle zum Versenden von Datenpaketen eingesetzt. Auf der Medium-Access-Control (MAC)-Schicht können Datenpakete zwischen Endgeräten versendet werden, wobei die Datenpakete im Unicast-Verfahren versendet werden und somit für jedes Endgerät sichtbar sind; Endgeräte sind also in der Lage, sowohl Datenpakete zu erkennen, die an sie adressiert sind, als auch Datenpakete zu erkennen, die an andere Endgeräte adressiert sind.

Ein Endgerät verfügt über einen Transceiver, der in Lage ist, periodisch aus einem inaktiven Zustand zu erwachen und zu prüfen, ob eine Präambel versendet wurde. Weitere Komponenten des Endgeräts verbleiben vorläufig in einem inaktiven Zustand, soweit sie nicht anderweitig in Betrieb sind. Präambeln werden einem gesendeten Datenpaket vorangestellt, um das Datenpaket anzukündigen. Die Perioden für das Aufwachen und Prüfen können beliebig festgesetzt werden und umfassen in einem Beispiel eine Dauer, die mindestens so lang ist wie die Dauer für die Übertragung einer Präambel.

Zur Prüfung auf Vorliegen einer Präambel nimmt der Transceiver zunächst eine Feldstärkemessung auf einer vorbestimmten Frequenz vor. Die gemessene Feldstärke wird auch als Received Signal Strength Indicator (RSSI) bezeichnet. Liegt diese unter einem vorbestimmten Wert, tritt der Transceiver wieder in den inaktiven Zustand ein. Es liegt in diesem Fall kein Signal vor. Liegt jedoch ein Signal vor, wartet der Transceiver für eine vorbestimmte Dauer. Wird innerhalb dieser Dauer weder eine Präambel noch ein vorbestimmtes Synchronisationswort erkannt, tritt der Transceiver ebenfalls wieder in den inaktiven Zustand ein. Das vorbestimmte Synchronisationswort ist ein vorbestimmtes Bitwort, das innerhalb oder zu Beginn einer Präambel vorgesehen sein kann, um eine Synchronisation der Transceiver mehrerer Endgeräte miteinander zu ermöglichen.

In einer Ausführungsform der Erfindung enthält die Präambel eine Bitsequenz, eine erste Adresssequenz und eine zweite Adresssequenz. Die Abfolge aus Bitsequenz, erster und zweiter Adresssequenz und gegebenenfalls weiteren Bestandteilen wiederholt sich innerhalb einer Präambel. Die Reihenfolge aus Bitsequenz, erster und zweiter Adresssequenz ist beliebig, aber fest; beispielsweise kann die Präambel eine wiederkehrende Abfolge aus erster Adresssequenz, zweiter Adresssequenz und der Bitsequenz enthalten. Die Bitsequenz entspricht dem Inhalt herkömmlicher Präambeln oder enthält ein Bitmuster, aus dem Endgeräte erkennen können, dass eine Präambel vorliegt und dass der Empfang eines Datenpakets ansteht. Insbesondere kann die Bitsequenz ein Synchronisationswort enthalten, das das Ende der Bitsequenz und den Beginn der nachfolgenden Adresssequenzen markiert. Die erste Adresssequenz bezeichnet einen ersten Adressbereich des Netzwerks. Die zweite Adresssequenz bezeichnet einen zweiten Adressbereich des Netzwerks, der innerhalb des ersten Adressbereichs liegt. In einer speziellen Ausführungsform entspricht die zweite Adresssequenz genau einer Adresse eines Endgerätes. In einer anderen Ausführungsform entspricht die zweite Adresssequenz einem Adressbereich, in dem die Adressen einer Gruppe von Endgeräten liegen, beispielsweise die Adressen einer Gruppe von Endgeräten auf einer Etage in einem Gebäude; in diesem Fall könnte der erste Adressbereich etwa den Adressen von Endgeräten in dem betreffenden Gebäude entsprechen. In einer weiteren Ausführungsform entspricht der zweite Adressbereich bestimmten Anwendungen, die auf Endgeräten ablaufen, beispielsweise Portadressen oder Adressen, die lokal in dem Netzwerk vergeben werden, während der erste Adressbereich einen Bereich von Endgeräte-Adressen enthält, beispielsweise IP-Adressen. Ein solcher Adressbereich kann beispielweise mittels Wildcards definiert sein, etwa in der Form 192.168.3.^{∗}, oder kann reguläre Ausdrücke enthalten, etwa 192.168. 3. [5-8]. Allgemein umfasst der erste Adressbereich Adressen, die auf einer unteren Netzwerkschicht geprüft werden können, beispielsweise der Data-Link-Schicht, während der zweite Adressbereich Adressen umfasst, die auf höheren Netzwerkschichten geprüft werden können, beispielsweise auf der Anwendungsschicht.

Erkennt der Transceiver ein Synchronisationswort und/oder eine Präambelsequenz, kann der Transceiver die erste Adresssequenz der Präambel lesen, und kann prüfen, ob eine Adresse dieses Endgeräts innerhalb des ersten Adressbereichs liegt.

Liegt die Adresse des Endgeräts außerhalb des ersten Adressbereichs, kann der Transceiver den aktiven Zustand verlassen und wieder in den inaktiven Zustand eintreten, ohne weitere Komponenten des Endgeräts zu benachrichtigen oder zu aktivieren.

Liegt eine Adresse des Endgeräts innerhalb des ersten Adressbereichs, kann der Transceiver weitere Komponenten des Endgeräts benachrichtigen. Insbesondere kann der Transceiver Komponenten gegebenenfalls in einen aktiven Zustand versetzen und ihnen die empfangene Präambel oder wenigstens die zweiten Adresssequenzen weitergeben. Die Komponenten können beispielsweise einen Mikrocontroller umfassen, auf dem eine oder mehrere Anwendungen ablaufen. Alternativ zu einem Mikrocontroller kann ein Prozessor oder auch eine andere Ausführungseinheit verwendet werden. Die Ausführungseinheit verfügt über Programmcode, der in der Lage ist, die vom Transceiver übergebenen Daten anzunehmen und zu prüfen, ob diese für das Endgerät beziehungsweise Komponenten oder Anwendungen auf dem Endgerät bestimmt sind. Insbesondere kann durch eine oder mehrere Anwendungen auf der Ausführungseinheit geprüft werden, ob eine Adresse dieser Anwendungen in dem zweiten Adressbereich liegt.

Liegt keine der Adressen der Ausführungseinheit oder einer der Anwendungen dieser Ausführungseinheit in dem zweiten Adressbereich, kann diese Komponente wieder in einen inaktiven Zustand wechseln.

Liegen jedoch Adressen der Ausführungseinheit oder der Anwendungen in dem zweiten Adressbereich, so verbleibt die Ausführungseinheit in dem aktiven Zustand, um das zu erwartende Datenpaket zu empfangen. In diesem Fall kann beispielsweise der Transceiver benachrichtigt werden, dass das Datenpaket anzunehmen ist und weitergegeben werden soll.

In einer besonderen Ausführungsform umfasst die Präambel neben der Bitsequenz sowie erster und zweiter Adresssequenz eine Zählersequenz. Die Zählersequenz kann in beliebiger Position vor, zwischen oder nach der Bitsequenz, der ersten Adresssequenz und der zweiten Adresssequenz stehen; jedoch steht die Zählersequenz immer an der gleichen Position. Die Zählersequenz wird innerhalb einer Präambel gemeinsam mit der Bitsequenz, der ersten Adresssequenz und der zweiten Adresssequenz wiederholt, bis das anschließende Datenpaket gesendet wird. Während erste und zweite Adresssequenz jedoch bei jeder Wiederholung den gleichen Wert enthalten, weist die Zählersequenz einen Wert auf, der die jeweils verbleibende Anzahl von Abfolgen aus Bitsequenz, erster Adresssequenz, zweiter Adresssequenz bis zum Empfang des Datenpakets wiedergibt. In der letzten Abfolge vor dem Empfang des Datenpakets enthält die Zählersequenz den Wert Null.

In dieser Ausführungsform können die Komponenten des Endgeräts, also etwa die Ausführungseinheit, nach der oben erläuterten Prüfung und der Feststellung, dass sie über eine Adresse in dem zweiten Adressbereich verfügen, die zuletzt empfangene Zählersequenz lesen, und können bestimmen, wann das Datenpaket voraussichtlich empfangen wird. Diese Bestimmung kann unter Verwendung der Bitlänge von Bitsequenz, erstem Adressbereich, zweitem Adressbereich und Zählersequenz sowie aus der aktuellen Bitübertragungsrate und dem Inhalt der Zählersequenz vorgenommen werden. Beispielsweise kann die verbleibende Zeit bei einer Bitübertragungsrate von m Bits je Sekunde, bei Bitlängen von jeweils a, b, c und d Bits für Bitsequenz, ersten Adressbereich, zweiten Adressbereich sowie Zählersequenz und einem Zählerwert der Zählersequenz von n als a^{∗}b^{∗}c^{∗}d^{∗}n/m Sekunden ermittelt werden. Die Ausführungseinheit kann für diese Dauer in einen inaktiven Zustand eintreten oder alternativ durch den Transceiver in einen inaktiven Zustand versetzt werden. Ist der Zählerwert bereits gering, beispielsweise unterhalb eines Schwellwerts, kann die Ausführungseinheit in einem aktiven Zustand verbleiben. Alternativ kann die ermittelte verbleibende Zeit mit einem Schwellwert verglichen werden, um zu entscheiden, ob die Ausführungseinheit in den inaktiven Zustand eintreten soll; ist die verbleibende Zeit kleiner als der Schwellwert, verbleibt die Ausführungseinheit in dem aktiven Zustand. Diese Ausführungsform ist besonders vorteilhaft, weil sie die aktuelle Datenübertragungsrate berücksichtigt.

In einer weiteren Ausführungsform kann das Ermitteln der Dauer bis zum Beginn des Datenpakets bereits im Rahmen der Prüfung durch den Transceiver hinsichtlich einer Adresse des Endgeräts in dem ersten Adressbereich erfolgen. Das Ermitteln kann insbesondere unabhängig davon erfolgen, ob die Adresse des Endgeräts in dem ersten Adressbereich liegt oder nicht. Liegt die Adresse nicht in dem ersten Adressbereich, kann der Transceiver - wie bereits erläutert - in einen Schlafzustand eintreten. In diesem Fall kann die Dauer des inaktiven Zustands eingestellt werden als die Summe aus der Dauer bis zum Beginn des Datenpakets und einer erwarteten Dauer zur Übertragung des Datenpakets. Dies ist besonders vorteilhaft, weil der Transceiver dann genau so lange inaktiv bleibt, wie die aktuelle, nicht an ihn gerichtete, Präambelsequenz übertragen wird und wie das anschließend übersendete, ebenfalls nicht an ihn gerichtete, Datenpaket übertragen wird. Liegt die Adresse hingegen in dem ersten Adressbereich, kann der Transceiver, neben den bereits erläuterten Schritten zum Aktivieren der Ausführungseinheit, dieser die ermittelte Dauer übergeben, so dass die Dauer nicht neu berechnet werden muss.

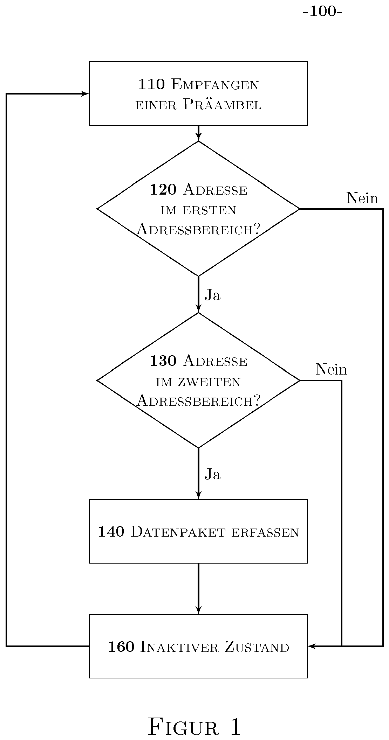

Figur 1 zeigt ein Verfahren 100 zum Detektieren eingehender Datenpakete. Das Verfahren umfasst Empfangen 110 einer Präambel an einem Transceiver. Der Transceiver kann die Präambel beispielsweise erkennen mittels Messen eines RSSI, und kann feststellen, dass dieser über einem Schwellwert liegt. Der Transceiver kann ferner innerhalb einer vorbestimmten Dauer erkennen, dass dem RSSI ein Signal zugrunde liegt, das eine Präambel ist. Wird kein Signal oder keine Präambel erkannt, kann der Transceiver in einen inaktiven Zustand eintreten und beispielsweise nach zufälliger Dauer oder nach einer vorbestimmten Dauer wieder aktiv werden und erneut prüfen, ob eine Präambel gesendet wird.

Verfahren 100 umfasst ferner Prüfen 120 durch den Transceiver, ob eine Adresse des Transceivers beziehungsweise dessen Endgeräts in einem ersten Adressbereich liegt, der aus der Präambel gelesen wird. Beispielsweise kann der erste Adressbereich mittels eines vorbestimmten Synchronisationsworts in einer Bitsequenz der Präambel identifiziert werden. Liegt die Adresse außerhalb des ersten Adressbereichs, tritt der Transceiver in den inaktiven Zustand ein.

Liegt die Adresse innerhalb des ersten Adressbereichs, erfolgt eine Prüfung 130, ob die Adresse auch in einem zweiten Adressbereich liegt. Der zweite Adressbereich wird durch den Transceiver aus der Präambel gelesen. Die Prüfung 130 erfolgt durch eine Ausführungseinheit des Endgeräts. Diese kann zum Zwecke der Prüfung in einen aktiven Zustand versetzt werden, beispielsweise durch den Transceiver. In bestimmten Ausführungsformen kann die Prüfung des zweiten Adressbereichs nicht durch den Transceiver vorgenommen werden, weil die Adressen, die gegen diesen Adressbereich zu prüfen sind, nur bestimmten Anwendungen bekannt sind, die auf einem Mikrocontroller oder anderen Ausführungseinheiten des Endgerätes ablaufen, oder weil sie allgemein nur auf einer Netzwerkschicht bekannt ist, die durch einen Transceiver nicht implementiert wird. Liegt keine solcher Adressen in dem zweiten Adressbereich, wird das Verfahren durch Eintreten 160 der Ausführungseinheit in einen inaktiven Zustand fortgesetzt.

Wird durch eine Ausführungseinheit bei 130 festgestellt, dass Adressen der Ausführungseinheit in dem zweiten Adressbereich liegen, kann bei 140 das Datenpaket erfasst werden. Anschließend kann Ausführungseinheit bei 160 wieder in einen inaktiven Zustand eintreten. Das Verfahren 100 kann beliebig wiederholt werden, beispielsweise in periodischen Abständen. Werden periodische Abstände gewählt, sind diese vorzugsweise höchstens so lang wie die Dauer, die bei gegebener Übertragungsrate benötigt wird, um eine Präambelsequenz zu übertragen; dies gilt etwa dann, wenn alle Präambelsequenzen eine gleiche Länge aufweisen.

In einer speziellen Ausführungsform kann das Verfahren 100 vor dem Erfassen 140 des Datenpakets die Dauer bis zum Empfang des Pakets ermitteln. Zu diesem Zweck kann die Präambel neben Bitsequenz, erster Adresssequenz und zweiter Adresssequenz eine Zählersequenz enthalten. Die Präambel wird fortlaufend bis zum Empfangen des Pakets wiederholt. Dabei gibt die Zählersequenz jeweils an, wie viele Wiederholungen noch bis zum Paket verbleiben. Anhand der Anzahl dieser Wiederholungen sowie der Länge einer Präambel und auch der aktuellen Bitübertragungsrate kann eine Dauer bis zum Eintreffen des Pakets ermittelt werden. Sowohl Transceiver als auch Mikrocontroller oder andere Ausführungseinheiten können bis zu diesem Zeitpunkt in einem inaktiven Zustand verbleiben. Optional können Transceiver und Ausführungseinheit nach Bestimmen einer solchen Dauer lediglich dann in einen inaktiven Zustand eintreten, wenn die Dauer über einer vorbestimmten Dauer liegt, um allzu kurzzeitiges Wechseln zwischen den Zuständen zu vermeiden.

Alternativ zu dieser speziellen Ausführungsform kann eine Dauer bis zum Eintreffen des nächsten Pakets auch bereits im Anschluss an Empfangen 110 der Präambel ermittelt werden, unabhängig davon, ob bei 120 eine Adresse des Endgeräts in dem zweiten Adressbereich bestimmt wird oder nicht. Liegt bei 120 die Adresse nicht in dem ersten Adressbereich, kann der inaktive Zustand bei 160 für die Summe aus ermittelter Dauer und derjenigen Dauer, die für die Übertragung des Datenpakets benötigt wird, eingehalten werden. Auf diese Weise verbringen Transceiver und Ausführungseinheiten die gesamte Zeit zur Übertragung des anschließenden, nicht an dieses Endgerät gerichteten, Datenpakets. Liegt bei 120 die Adresse hingegen in dem ersten Adressbereich, kann sie bei 130 an die Ausführungseinheit übergeben werden und dort weiter verwendet werden. Beispielsweise kann die Ausführungseinheit in dem Fall, dass bei 130 keine Adresse in dem zweiten Adressbereich liegt, den Transceiver veranlassen, für die Summe aus der Dauer bis zum Eintreffen des Datenpakets und der Dauer bis zum Ende der Übertragung des Pakets in einen inaktiven Zustand zu wechseln. Liegt die Adresse hingegen in dem zweiten Adressbereich, kann die Ausführungseinheit bis zur Erfassung des Pakets bei 140 inaktiv bleiben, ohne die bereits durch den Transceiver ermittelte Dauer neu bestimmen zu müssen.

Das Verfahren 100 kann wiederholt werden, indem der Transceiver aus dem inaktiven Zustand wieder in den aktiven Zustand eintritt, beispielsweise nach einer vorbestimmten Periode, und bei 110 eine Präambel empfängt.

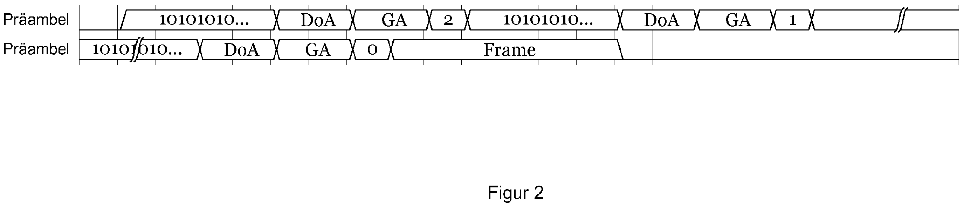

Figur 2 zeigt eine beispielhafte Präambel bestehend aus einer Abfolge, umfassend Bitsequenz 10101010, erste Adresssequenz (Domänenadresse DoA) und zweite Adresssequenz (Gruppenadresse GA). Ebenfalls gezeigt ist eine beispielhafte Zählersequenz mit dem Wert 2. Die Abfolge wiederholt sich in dem gezeigten Beispiel zwei Mal, wobei die Zählersequenz jeweils mit dekrementiertem Wert gezeigt ist. Auf den Wert 0 folgt unmittelbar ein Datenpaket (Frame).

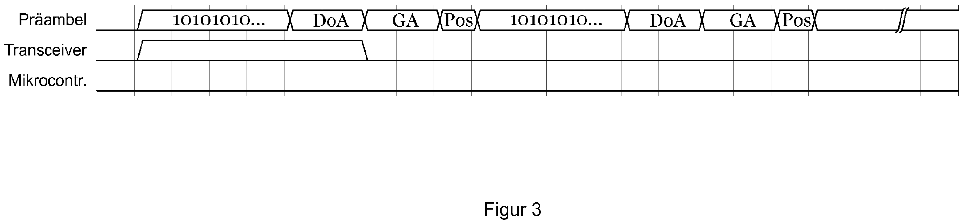

Figur 3 zeigt eine beispielhafte Präambel mit Aktivitätsdiagrammen von Transceiver und Ausführungseinheit (Mikrocontroller). In einer ersten Phase befindet sich der Transceiver in einem aktiven Zustand und erkennt eine Präambel an ihrer Bitsequenz. Dies kann beispielsweise anhand eines Synchronisationswortes (nicht gezeigt) innerhalb der Bitsequenz erfolgen. Der Transceiver bleibt bis zum Erscheinen einer ersten Adresssequenz (DoA) aktiv und prüft dann, ob das Endgerät des Transceivers eine Adresse aufweist, die in einem ersten Adressbereich liegt, der in dieser Adresssequenz angegeben ist. Im gezeigten Fall liegt die Adresse nicht in dem ersten Adressbereich. Der Transceiver tritt daher in einen Schlafzustand ein, beispielsweise für eine vorbestimmte Dauer, insbesondere für eine Dauer, die maximal einer Länge der Präambel entspricht. Erneut wird die erste Adresssequenz und ein erster Adressbereich erkannt und geprüft, und wiederum liegt die eigene Adresse nicht in dem ersten Adressbereich. Der Mikrocontroller beziehungsweise die Ausführungseinheit verbleibt durchgehend in einem inaktiven Zustand.

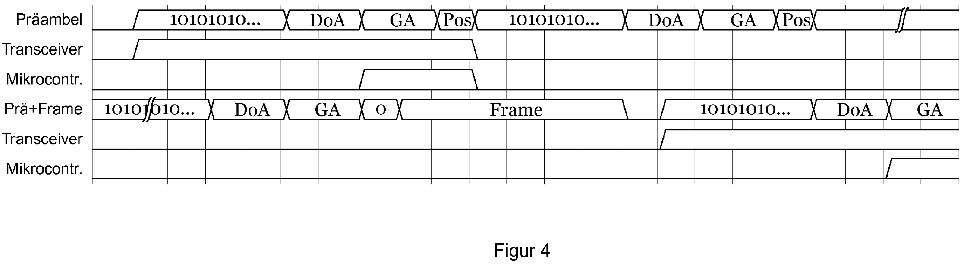

Figur 4 zeigt einen Transceiver im aktiven Zustand. Der Transceiver liest einen ersten Adressbereich aus einer ersten Adresssequenz DoA ein und aktiviert die Ausführungseinheit. Die Ausführungseinheit liest einen zweiten Adressbereich aus einer zweiten Adresssequenz GA sowie die nachfolgende Zählersequenz Pos und prüft, ob eine Adresse der Ausführungseinheit in dem zweiten Adressbereich liegt. Im vorliegenden Fall verläuft die Prüfung negativ. Die Ausführungseinheit bestimmt in diesem Fall anhand der Zählersequenz und weiterer Daten die verbleibende Dauer bis zum Ende des anstehenden, nicht für dieses Endgerät bestimmten Datenpakets (Frame) und übergibt diese Dauer an den Transceiver oder programmiert diesen, nach Ablauf dieser Dauer in einen aktiven Zustand einzutreten. Anschließend nimmt auch die Ausführungseinheit den inaktiven Zustand an. In der Folge erwacht der Transceiver, erkennt die neue Präambel und eine neue erste Adresssequenz DoA, prüft die eigene Adresse gegenüber der Adresssequenz und versetzt die Ausführungseinheit erneut in aktiven Zustand. Die Ausführungseinheit prüft, ob eine eigene Adresse in der neuen zweiten Adresssequenz liegt. In der gezeigten Ausführungsform bleibt der Transceiver wach, bis die Prüfung durch die Ausführungseinheit abgeschlossen ist. Jedoch kann der Transceiver alternativ unmittelbar bei Beginn der Prüfung durch die Ausführungseinheit in den inaktiven Zustand eintreten, beispielsweise maximal für eine Dauer einer Präambelsequenz.

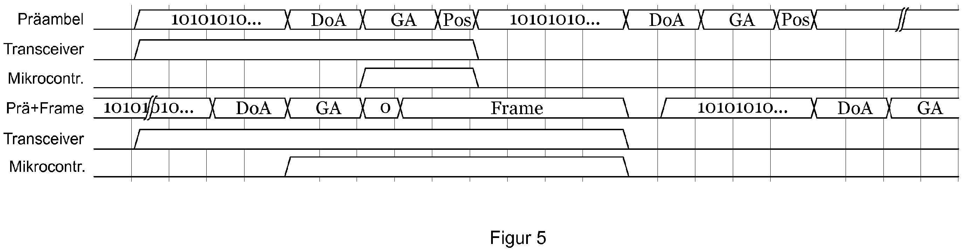

Figur 5 zeigt Erkennen einer ersten Präambel durch einen Transceiver und Prüfen eines ersten Adressbereichs. Die Prüfung verläuft positiv, und die Ausführungseinheit wird in einen aktiven Zustand versetzt. Die Ausführungseinheit liest den zweiten Adressbereich dieser Präambel und deren Zählersequenz. In dem gezeigten Beispiel verfügt die Ausführungseinheit beziehungsweise deren Endgerät oder darauf laufende Anwendungen über eine Adresse, die in dem zweiten Adressbereich liegt. Jedoch zeigt die Zählersequenz an, dass der anstehende Frame noch nicht unmittelbar, sondern erst nach weiteren Wiederholungen der ersten Präambel gesendet wird. Der Mikrocontroller tritt daher exakt für den bis zum Erscheinen des Frames verbleibenden Zeitraum in einen inaktiven Zustand ein. In Figur 5 ist eine Variation dieser Maßnahme gezeigt, bei der die Ausführungseinheit bereits aktiv wird, wenn die zweite Adresssequenz und nachfolgende Zählersequenz zum letzten Mal gesendet wird. Nach dem Einlesen des Datenpakets tritt die Ausführungseinheit wieder in den inaktiven Zustand ein.

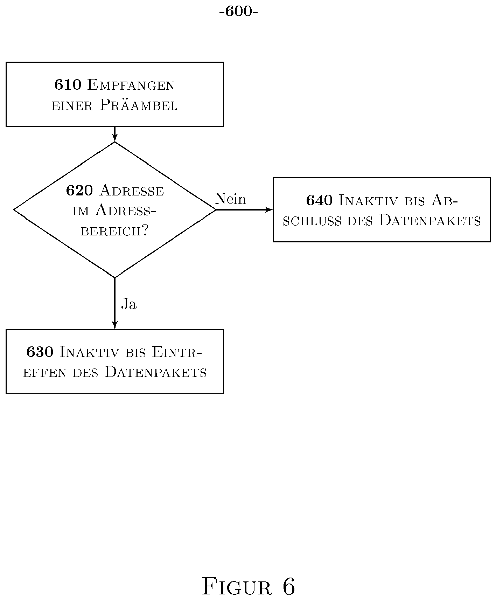

Figur 6 zeigt eine weitere Ausführungsform der Erfindung. In dieser Ausführungsform enthält die Präambel lediglich eine einzige Adresssequenz und gleicht ansonsten den bisher erläuterten Präambeln.

In Schritt 610 empfängt ein aktiven Transceiver eine Präambel und erkennt die in der Präambel enthaltene Adresssequenz. Es erfolgt bei 620 eine Prüfung durch den Transceiver, ob eine Adresse des Endgerätes in einem Adressbereich enthalten ist, der in der Adresssequenz angegeben ist. Vor oder nach diesem Schritt wird aus der Präambel die bereits erläuterte Zählersequenz gelesen und eine Bestimmung der Dauer bis zum Erscheinen des anschließenden Datenpakets vorgenommen. Wurde bei 620 festgestellt, dass das Datenpaket an das vorliegende Endgerät adressiert ist, kann der Transceiver und eventuell weitere Komponenten oder auch das gesamte Endgerät für die bestimmte Dauer in einen inaktiven Zustand versetzt werden. Anschließend treten die inaktiven Komponenten, zumindest aber der Transceiver, in den aktiven Zustand ein und lesen das Datenpaket. Wurde bei 620 hingegen festgestellt, dass das Datenpaket nicht an das Endgerät adressiert ist, kann bei 640 die erwartete Dauer zur Übertragung des Datenpakets festgestellt werden und der inaktive Zustand bis zum Abschluss dieser Übertragung angenommen werden. Schritt 640 ist vor allem dann sinnvoll, wenn die Länge des Datenpakets vorab bekannt ist, etwa in Protokollen, in denen Datenpakete immer die gleiche Länge haben, oder auch aufgrund einer Längenangabe in der Präambel. Alternativ kann das Verfahren 600 auch ohne Schritt 640 ausgeführt werden.

Eine weitere Ausführungsform der Erfindung betrifft ein System, das wenigstens zwei Endgeräte umfasst. Jedes der Endgeräte kann Präambeln und Datenpakete versenden versenden und empfangen und ist eingerichtet, die hier beschriebenen Schritte auszuführen

Ausführungsformen der Erfindung können in Form von Anweisungen auf einem computerlesbaren Medium gespeichert werden. Weitere Ausführungen betreffen ein Endgerät mit einem Transceiver und weiteren Komponenten, die zum Ausführen solcher Anweisungen eingerichtet sind. Außerdem umfasst die Erfindung auch ein Endgerät zum Senden einer Präambel in einer der oben beschriebenen Formen.

Die Erfindung spart Energie, indem sie zweiteilige Adressbereiche verwendet und den zweiten lediglich bedingt prüft. Ist eine solche Bedingung nicht gegeben, kann eine Komponente, die den zweiten Adressbereich prüft, in einem inaktiven Zustand verbleiben, so dass eine erhebliche Energieeinsparung entsteht. Bestimmte Ausführungsformen bieten zudem den Vorteil, die Dauer inaktiver Zustände zu verlängern, insbesondere wenn anhand einer Zählersequenz die Dauer einer aktuellen Präambel und eines zugeordnetes Datenpakets, die nicht an das eigene Endgerät adressiert sind, festgestellt wird. Eine Einsparung kann sich auch unabhängig davon ergeben, ob ein Datenpaket an das eigene Endgerät adressiert ist. Selbst wenn das Datenpaket an dieses Endgerät adressiert ist, kann bis zum Eintreffen des Datenpakets noch ein inaktiver Zustand angenommen werden.

## Patentansprüche

1. Verfahren, umfassend:
Empfangen eines Netzwerksignals durch einen Transceiver eines Endgeräts in einem Netzwerk, wobei das Netzwerksignal eine Präambelsequenz einschließlich einer Bitsequenz, einer ersten Adresssequenz, einer zweiten Adresssequenz und einer Datensequenz enthält;
Erkennen (110) der Präambelsequenz durch den Transceiver, und Bestimmen eines ersten Adressbereichs aus der ersten Adresssequenz; und
falls eine Adresse des Endgeräts in dem ersten Adressbereich liegt (120), Versetzen einer Ausführungseinheit des Endgeräts in einen aktiven Zustand, Bestimmen, mittels der Ausführungseinheit, eines zweiten Adressbereichs aus der zweiten Adresssequenz, und, falls die Adresse des Endgeräts in dem zweiten Adressbereich liegt (130), Verarbeiten (140) der Datensequenz;
**dadurch gekennzeichnet, dass** die Präambelsequenz eine oder mehrere Abfolgen enthält, wobei jede der Abfolgen die Bitsequenz sowie die erste und zweite Adresssequenz und eine Zählersequenz enthält, wobei die Zählersequenz die verbleibende Anzahl der Abfolgen bis zum Ende der Präambelsequenz angibt, und wobei das Bestimmen des ersten Adressbereichs und des zweiten Adressbereichs aus der ersten und der zweiten Adresssequenz einer empfangenen Abfolge erfolgt, und wobei das Verfahren ferner umfasst: Bestimmen einer Dauer bis zum Ende der Präambelsequenz anhand der Zählersequenz in der empfangenen Abfolge, wobei die Ausführungseinheit für die bestimmte Dauer in einen inaktiven Zustand versetzt wird (160), falls die Adresse des Endgeräts in dem ersten Adressbereich und in dem zweiten Adressbereich liegt.

2. Verfahren nach Anspruch 1, ferner umfassend:
In regelmäßigen Zeitabständen Eintreten des Transceivers aus einem inaktiven Zustand in einen aktiven Zustand und Prüfen, ob eine Präambelsequenz empfangen wird, wobei die regelmäßigen Zeitabstände höchstens so lang sind wie eine Dauer, die bei vorgegebener Übertragungsrate benötigt wird, um eine Präambelsequenz zu übertragen.

3. Verfahren nach Anspruch 1 oder 2, ferner umfassend:
Eintreten des Transceivers in einen inaktiven Zustand, wenn das Netzwerksignal unter einem vorbestimmten Schwellwert liegt oder wenn innerhalb einer vorbestimmten Dauer keine Präambelsequenz erkannt wird oder wenn in einer Präambelsequenz keine Adresssequenz erkannt wird oder wenn das Verarbeiten der Datensequenz abgeschlossen wurde.

4. Verfahren nach Anspruch 1, ferner umfassend:
falls die Adresse des Endgeräts nicht in dem ersten Adressbereich liegt (120) und/oder nicht in dem zweiten Adressbereich liegt (130), Versetzen (160) des Transceivers und
der Ausführungseinheit in den inaktiven Zustand für die bestimmte Dauer und eine erwartete Dauer der Datensequenz.

5. System, umfassend:
ein erstes Endgerät; und
wenigstens ein zweites Endgerät, wobei jedes der zweiten Endgeräte einen Transceiver und eine Ausführungseinheit enthält;
wobei das erste Endgerät eingerichtet ist, eine Präambelsequenz einschließlich einer Bitsequenz, einer ersten Adresssequenz, einer zweiten Adresssequenz und einer Datensequenz an ein oder mehrere der zweiten Endgeräte zu senden;
wobei jedes der zweiten Endgeräte eingerichtet ist, mittels seines Transceivers eine eingehende Präambelsequenz zu erkennen(1 10) und aus der ersten Adresssequenz einen ersten Adressbereich zu bestimmen und, falls eine Adresse dieses zweiten Endgeräts in dem ersten Adressbereich liegt, dessen Ausführungseinheit in einen aktiven Zustand zu versetzen und mittels dieser Ausführungseinheit aus der zweiten Adresssequenz einen zweiten Adressbereich zu bestimmen und, falls die Adresse des zweiten Endgeräts in dem zweiten Adressbereich liegt (130), die Datensequenz zu verarbeiten (140);
**dadurch gekennzeichnet, dass** jede der Abfolgen die Bitsequenz sowie die ersten und zweiten Adresssequenzen und eine Zählersequenz enthält, wobei die Zählersequenz die verbleibende Anzahl der Abfolgen bis zum Ende der Präambelsequenz angibt, und wobei das Bestimmen des ersten Adressbereichs und des zweiten Adressbereichs jedes der zweiten Endgeräte eingerichtet ist, aus der ersten und der zweiten Adresssequenz einer empfangenen Abfolge vorzunehmen und anhand der Zählersequenz in der empfangenen Abfolge eine Dauer bis zum Ende der Präambelsequenz zu bestimmen; wobei jedes der zweiten Endgeräte ferner eingerichtet ist, den Transceiver und die Ausführungseinheit für die bestimmte Dauer in den inaktiven Zustand zu versetzen (160), falls eine Adresse des Netzwerkknotens in dem zweiten Adressbereich liegt.

6. System nach Anspruch 5, wobei der Transceiver eingerichtet ist, in regelmäßigen Zeitabständen aus einem inaktiven Zustand in einen aktiven Zustand einzutreten und jeweils zu prüfen, ob eine Präambelsequenz empfangen wird, wobei die regelmäßigen Zeitabstände höchstens so lang sind wie eine Dauer, die bei vorgegebener Übertragungsrate benötigt wird, um eine Präambelsequenz zu übertragen.

7. System nach Anspruch 5 oder 6, ferner umfassend:
eintreten des Transceivers in einen inaktiven Zustand, wenn das Netzwerksignal unter einem vorbestimmten Schwellwert liegt oder wenn innerhalb einer vorbestimmten Dauer keine Präambelsequenz erkannt wird oder wenn in einer Präambelsequenz keine Adresssequenz erkannt wird oder wenn das Verarbeiten der Datensequenz abgeschlossen wurde.

8. System nach Anspruch 5, wobei jedes der zweiten Endgeräte eingerichtet ist, den Transceiver und die Ausführungseinheit dieses zweiten Endgeräts für die bestimmte Dauer und eine erwartete Dauer der Datensequenz in den inaktiven Zustand zu versetzen (160), falls eine Adresse dieses zweiten Endgeräts nicht in dem ersten Adressbereich liegt (120) und/oder nicht in dem zweiten Adressbereich liegt (130).

9. Computerlesbares Medium mit darauf gespeicherten Befehlen, die bei Ausführung durch einen Prozessor diesen veranlassen, das Verfahren nach einem der Ansprüche 1 bis 4 durchzuführen.

## Claims

1. A method, comprising:
Receiving a network signal by a transceiver of a terminal in a network, the network signal including a preamble sequence including a bit sequence, a first address sequence, a second address sequence, and a data sequence;
Detecting (110) the preamble sequence by the transceiver, and determining a first address range from the first address sequence; and
if an address of the terminal device is in the first address range (120), placing an execution unit of the terminal device in an active state, determining, by means of the execution unit, a second address range from the second address sequence, and, if the address of the terminal device is in the second address range (130), processing (140) the data sequence;
**characterized in that** the preamble sequence includes one or more sequences, each of the sequences including the bit sequence and the first and second address sequences and a counter sequence, the counter sequence indicating the remaining number of sequences to the end of the preamble sequence, and wherein determining the first address range and the second address range is from the first and second address sequences of a received sequence, and wherein the method further comprises: determining a duration to the end of the preamble sequence based on the counter sequence in the received sequence, wherein the execution unit is placed in an inactive state (160) for the determined duration if the address of the terminal device is in the first address range and in the second address range.

2. The method of claim 1, further comprising:
at regular time intervals, entering of the transceiver from an inactive state to an active state and checking whether a preamble sequence is received, the regular time intervals being at most as long as a duration required to transmit a preamble sequence at a predetermined transmission rate.

3. The method according to claim 1 or 2, further comprising:
Entering of the transceiver into an inactive state when the network signal is below a predetermined threshold or when no preamble sequence is detected within a predetermined duration or when no address sequence is detected in a preamble sequence or when processing of the data sequence has been completed.

4. The method of claim 1, further comprising:
if the address of the terminal device is not in the first address range (120) and/or is not in the second address range (130), placing (160) the transceiver and the execution unit in the inactive state for the determined duration and an expected duration of the data sequence.

5. A system, including:
a first terminal; and
at least one second terminal, each of the second terminals including a transceiver and an execution unit;
wherein the first terminal is adapted to send a preamble sequence including a bit sequence, a first address sequence, a second address sequence, and a data sequence to one or more of the second terminals;
wherein each of the second terminals is arranged to recognize an incoming preamble sequence by means of its transceiver (110) and to determine a first address range from the first address sequence and, if an address of this second terminal lies in the first address range, to set its execution unit into an active state and, by means of this execution unit, to determine a second address range from the second address sequence and, if the address of the second terminal lies in the second address range(130), to process the data sequence(140);
**characterized in that** each of the sequences includes the bit sequence and the first and second address sequences and a counter sequence, the counter sequence indicating the remaining number of sequences until the end of the preamble sequence, and wherein determining the first address range and the second address range of each of the second terminals is arranged to be performed from the first and second address sequences of a received sequence and to determine a duration until the end of the preamble sequence based on the counter sequence in the received sequence; wherein each of the second terminals is further adapted to set (160) the transceiver and the execution unit to the inactive state for the determined duration if an address of the network node is in the second address range.

6. The system of claim 5, wherein the transceiver is arranged to enter from an inactive state to an active state at regular time intervals and to check each time whether a preamble sequence is received, the regular time intervals being at most as long as a duration required to transmit a preamble sequence at a predetermined transmission rate.

7. The system according to claim 5 or 6, further comprising:
the transceiver entering an inactive state when the network signal is below a predetermined threshold or when no preamble sequence is detected within a predetermined duration or when no address sequence is detected in a preamble sequence or when the processing of the data sequence has been completed.

8. The system of claim 5, wherein each of the second terminals is adapted to place (160) the transceiver and the execution unit of that second terminal in the inactive state for the determined duration and an expected duration of the data sequence if an address of that second terminal is not in the first address range (120) and/or is not in the second address range (130).

9. A computer-readable medium having instructions stored thereon which, when executed by a processor, cause the processor to perform the method of any one of claims 1 to 4.

## Revendications

1. Procédé comprenant :
la réception d'un signal de réseau par un émetteur-récepteur d'un terminal dans un réseau, dans lequel le signal de réseau contient une séquence de préambule avec une séquence binaire, une première séquence d'adresses, une deuxième séquence d'adresses et une séquence de données ;
la détection (110) de la séquence de préambule par l'émetteur-récepteur et la détermination d'une première plage d'adresses provenant de la première séquence d'adresse ; et
dans le cas où une adresse du terminal se trouve dans la première plage d'adresses (120), mise d'une unité d'exécution du terminal dans un état actif, détermination, au moyen de l'unité d'exécution, d'une deuxième plage d'adresses provenant de la deuxième séquence d'adresses et, dans le cas où l'adresse du terminal se trouve dans la deuxième plage d'adresses (130), traitement (140) de la séquence de données ;
**caractérisé en ce que** la séquence de préambule contient une ou plusieurs séries, dans laquelle chacune des séries contient la séquence binaire ainsi que les première et deuxième séquences d'adresses et une séquence de comptage, dans laquelle la séquence de comptage indique le nombre restant de séries jusqu'à la fin de la séquence de préambule et dans laquelle la détermination de la première plage d'adresses et de la deuxième plage d'adresses est effectuée à partir des première et deuxième séquences d'adresses d'une série reçue et dans laquelle le procédé comprend en outre : la détermination d'une durée jusqu'à la fin de la séquence de préambule à l'aide de la séquence de comptage dans la série reçue, dans laquelle l'unité d'exécution est mise dans un état inactif pendant la durée déterminée (160), dans le cas où l'adresse du terminal se trouve dans la première plage d'adresses et dans la deuxième plage d'adresses.

2. Procédé selon la revendication 1, comprenant en outre :
à des intervalles de temps réguliers, passage de l'émetteur-récepteur d'un état inactif à un état actif et vérification si une séquence de préambule est reçue, dans lequel les intervalles de temps réguliers sont, au maximum, aussi longs qu'une durée nécessaire pour de transmettre une séquence de préambule avec un débit de transmission prédéterminé.

3. Procédé selon la revendication 1 ou 2, comprenant en outre :
le passage de l'émetteur-récepteur dans un état inactif lorsque le signal de réseau se trouve en dessous d'une valeur seuil prédéterminée ou lorsque, dans une durée prédéterminée, aucune séquence de préambule n'est détectée ou lorsque, dans une séquence de préambule, aucune séquence d'adresses n'est détectée ou lorsque le traitement de la séquence de données a été terminée.

4. Procédé selon la revendication 1, comprenant en outre :
dans le cas où l'adresse du terminal ne se trouve pas dans la première plage d'adresses (120) et/ou ne se trouve pas dans la deuxième plage d'adresses (130), mise (160) de l'émetteur-récepteur et de l'unité d'exécution dans l'état inactif pendant la durée déterminée et une durée attendue de la séquence de données.

5. Système comprenant :
un premier terminal ; et
au moins un deuxième terminal, dans lequel chacun des deuxièmes terminaux contient un émetteur-récepteur et une unité d'exécution ;
dans lequel le premier terminal est conçu pour envoyer une séquence de préambule, avec une séquence binaire, une première séquence d'adresses, une deuxième séquence d'adresses et une séquence de données à un ou plusieurs des deuxièmes terminaux ;
dans lequel chacun des deuxièmes terminaux est conçu pour détecter, au moyen de son émetteur-récepteur, une séquence de préambule entrante (110) et pour déterminer, à partir de la première séquence d'adresses, une première plage d'adresses et, dans le cas où une adresse de ce deuxième terminal se trouve dans la première plage d'adresses, pour mettre son unité d'exécution dans un état actif et pour déterminer, au moyen de cette unité d'exécution, à partir de la deuxième séquence d'adresses, une deuxième plage d'adresse et, dans le cas où l'adresse du deuxième terminal se trouve dans la deuxième plage d'adresses (130), pour traiter la séquence de données (140) ;
**caractérisé en ce que** chacune des séries contient la séquence binaire ainsi que les premières et deuxièmes séquences d'adresses et une séquence de comptage, dans lequel la séquence de comptage indique le nombre restant de séries jusqu'à la fin de la séquence de préambule et dans lequel la détermination de la première plage d'adresses et de la deuxième plage d'adresses de chacun des deuxièmes terminaux est conçue pour être effectuée à partir des première et deuxième séquences d'adresses d'une série reçue et pour déterminer, à l'aide de la séquence de comptage, dans la série reçue, une durée jusqu'à la fin de la séquence de préambule ; dans lequel chacun des deuxièmes terminaux est en outre conçu pour mettre l'émetteur-récepteur et l'unité d'exécution dans l'état inactif pendant la durée déterminée (160), dans le cas où une adresse du nœud de réseau se trouve dans la deuxième plage d'adresses.

6. Système selon la revendication 5, dans lequel l'émetteur-récepteur est conçu pour passer, à des intervalles de temps réguliers, d'un état inactif à un état actif et pour vérifier respectivement si une séquence de préambule est reçue, dans lequel les intervalles de temps réguliers sont, au maximum, aussi longs qu'une durée nécessaire pour de transmettre une séquence de préambule avec un débit de transmission prédéterminé.

7. Système selon la revendication 5 ou 6, comprenant en outre :
passage de l'émetteur-récepteur dans un état inactif lorsque le signal de réseau se trouve en dessous d'une valeur seuil prédéterminée ou lorsque, dans une durée prédéterminée, aucune séquence de préambule n'est détectée ou lorsque, dans une séquence de préambule, aucune séquence d'adresses n'est détectée ou lorsque le traitement de la séquence de données a été terminée.

8. Système selon la revendication 5, dans lequel chacun des deuxièmes terminaux est conçu pour mettre l'émetteur-récepteur et l'unité d'exécution de ce deuxième terminal, pendant la durée déterminée et la durée attendue de la séquence de données, dans l'état inactif (160), dans le cas où une adresse de ce deuxième terminal ne se trouve pas dans la première plage d'adresses (120) et/ou ne se trouve pas dans la deuxième plage d'adresses (130).

9. Support lisible par un ordinateur avec des instructions enregistrées dessus qui, lorsqu'elles sont exécutées par un processeur, font en sorte que celui-ci exécute le procédé selon l'une des revendications 1 à 4.
